# EUROPEAN PATENT APPLICATION

(11) **EP 4 545 705 A1**
(43) Date of publication of application: **30.04.2025**
(21) Application number: 24208806.0
(22) Date of filing: 24.10.2024
(51) Int. Cl.: E01B 29/32, B25J 5/00, B25J 11/00, B65G 41/02

(54) **TRACK WORK WITH THE HELP OF TWO OR THREE ROBOTIC ARMS**

(30) Priority: 24.10.2023 NL 2036108
(71) Applicant: Strukton Rail Nederland B.V., 3542DA Utrecht (NL)
(72) Inventor: Elst, Sven, p/a 3542DA Utrecht (NL)
(74) Representative: Assendelft, Jacobus H.W.

(57) **Abstract**

Railway vehicle for carrying out work on a section of a railway, the work may relate to maintenance or new construction, the rail vehicle comprises a chassis frame equipped with flanged rollers for driving over the two parallel rails of a railway, the rail vehicle delimits an internal work space, preferably open towards the bottom, which is equipped with a work device for working on the track structure, for example under the rail vehicle, for example for mounting an axle counter or a balise.

## Description

The invention relates to a railway vehicle and method for carrying out work on a section of a railway. The work may relate to maintenance or new construction. The railway vehicle comprises a chassis frame which is equipped with flanged rollers to travel over the two parallel rails of a railway. The railway vehicle delimits an internal work space, preferably open towards the bottom, which is equipped with a work device to work on the railway structure, for example under the railway vehicle, for example for mounting an axle counter or a balise. The railway is preferably the public civil railway network and/or intended for passenger and freight transport, such as a train, tram or metro line, preferably with an overhead line above the track for the electrical supply of the train locomotive.

EP3078774A1 discloses a bottomless container with running wheels, which is equipped in the internal work space with a six-axis robot arm of vertically articulated type, with which work can be carried out on the structure located under the container.

This work device must have sufficient performance, low energy consumption, manoeuvrability, limited weight, good balance, low centre of gravity, reproducible performance, such as for the tightening force for nuts or screws.

New construction or technical maintenance, particularly in the field of railways, outdoors or in an uncontrolled environment such as the space of railway tunnels, requires the use of powerful work devices that can perform various operations, such as drilling, sawing, machining by sanding (grinding), screwing, moving heavy objects or applying mechanical shocks. These work devices must be mobile. There is interest in powerful work devices for new construction or maintenance, which are also suitable for robotisation, so that people are freed from heavy and monotonous work under difficult working and weather conditions.

The object of the invention is to develop a railway vehicle with a work device with work tools with, preferably electric, drive motor, with which a railway component, such as a balise or axle counter, can be reliably and effectively mounted to the railway structure as much as possible, preferably fully, mechanised, whereby the work device is light in weight and delivers high performance with desired long-term use, is specifically aimed at the various applications and is built safely and reliably with a long service life, low weight, high reliability, low maintenance costs. The use of a person is limited as much as possible, preferably completely, to controlling and monitoring functions. It has been found that the stated objective can be achieved by using a work device equipped with two or more robot arms, preferably of a vertically articulated type, within the internal work space, which robot arms each have their own work tool, such as a clamping, screwing or drilling tool, and are mounted sufficiently close to each other on the chassis frame so that the work tools located on the robot arms can be placed within 20 or 30 or 50 centimetres of each other, preferably at the same location, on the track structure next to or under the railway vehicle.

Thus, a work device is proposed that is preferably equipped with at least or exactly two or three industrial robots that almost overlap in their work area, preferably overlap each other widely so that they can simultaneously reach the same location on the track structure with their free end with the associated work tool. For example, the working tool of one robot is used to hold a component to be mounted, such as a balise, axle counter or rail spring, in the desired position, while the working tool of the other robot is used to insert and tighten screws or bolts in order to mount the component in question in place on the track structure.

Preferably, one or more of the following applies to the working device: at least or exactly one or two or three or more, preferably all, robots are of at least or exactly three-, fiveor six-axis type; at least one or exactly one robot is positioned centred on the centre longitudinal axis of the railway vehicle and/or the railway, seen in plan view; at least one or exactly two robots are positioned in the horizontal direction transversely to the centre longitudinal axis of the railway vehicle and/or the railway at a distance, preferably at least 20 or 50 centimetres, from that centre longitudinal axis, preferably on either side of that centre longitudinal axis; the robot configuration is symmetrical, preferably related to the centre longitudinal axis of the railway vehicle and/or the railway; at least one or exactly one robot is mounted overhead and/or upside down, or with the underside of its base facing upwards; at least one or exactly one or exactly two robots are mounted horizontally or vertically; at least one or exactly one robot is mounted at a high level; at least one or exactly two robots are mounted at a low level, preferably identical; the high level is at least 1 or 1.5 metres above the low level; at least two or exactly two robots are identical and preferably at an identical level, preferably the low level; the base of at least one or exactly one robot, viewed in the direction of the central longitudinal axis of the railway vehicle and/or the railway, is at a distance of at least 25 or 50 and/or at most 100 or 150 centimetres from the base of at least one or exactly two or all other robots of the work device; the S-axis, i.e. the axis of movement of the base, of at least or exactly one robot is oriented vertically, upwards or downwards; of at least one or exactly two robots, the S-axis, i.e. the axis of movement of the base, is oriented horizontally; for at least or exactly two or three or all the robots of the work device, it applies that their base is located, measured horizontally, within 1 or 2 metres and/or measured vertically within 2 or 2.5 metres of one or two other robots of the work device; at least one or exactly two robots are mounted on the railway vehicle with the base or the S-axis, i.e. the axis of movement of the base, at a level at least 25 or 50 centimetres and/or at most 150 or 200 centimetres above the level of the bottom of the running wheels of the railway vehicle, in other words the top of the rail head in the case where the running wheel in question rests on the rail head in the typical manner; at least one or exactly one robot is mounted on the rail vehicle with the base at a level at least 200 or 250 centimetres above the level of the bottom of the rail vehicle's running wheels, in other words the top of the rail head in the event that the running wheel in question rests on the rail head in the typical manner; at least or exactly two or three or all robots belonging to the work device are mounted in a fixed position on the rail vehicle; at least two or exactly two robots are located on a, preferably horizontal, straight line that is perpendicular to the central longitudinal axis of the rail vehicle.

Furthermore, the rail vehicle is preferably equipped with at least or exactly one or two separate, preferably electric, drive motors each with a, preferably vertically, preferably downwardly, oriented, output shaft, preferably at a high level, preferably each placed approximately vertically directly above an associated rail or in the horizontal direction transverse to the central longitudinal axis of the rail vehicle and/or the railway at a distance, preferably at least 20 or 50 centimetres, positioned on either side of that central longitudinal axis. The input shaft of a work tool can be directly coupled to the output shaft of a drive motor. An existing robot arm can thus be used for the spatial positioning of a heavy-duty work tool. The drive motors are fixedly mounted to the chassis frame of the rail vehicle, preferably at a level at least 100 or 150 centimetres above the level of the bottom of the running wheels of the rail vehicle, in other words the top of the rail head in the event that the running wheel in question rests on the rail head in the typical manner.

The rail vehicle preferably provides one or more of the following:
- an internal work space that is open towards the bottom, for example so that the internal work space is provided between two upright side walls of the rail vehicle, from which internal work space access is obtained via the open bottom to the track structure under the rail vehicle;
- the internal work space is essentially a rectangular block with a width of at least 1 or 1.5 metres and a height of at least 1 or 1.5 or 2 or 2.5 metres; - the internal working space is provided between a front and a rear upright wall;
- the internal working space has a dimension and/or the front and rear upright walls, maintain a distance, measured along the median longitudinal axis of the vehicle and/or the railway, of at least 1 and/or at most 2 or 2.5 or 3 metres;

- a chassis frame formed by tubes and/or profiles;
- panels attached to the chassis frame to form walls to form an internal working space shielded from the elements;
- designed as a rail/road vehicle;
- light in weight, for example a maximum of 3 or 5 or 10 thousand kilograms so that it can be transported by road as a lorry load.

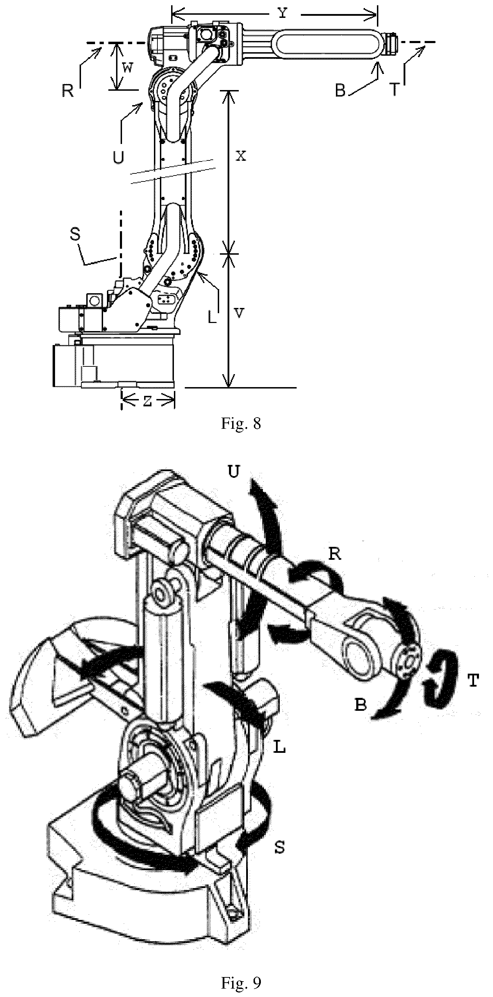

For the minimum or exactly one or two or three or all industrial robot arms of the work device, preferably one or more of the following applies:
- contains the following axes of movement: S, L, U, R, B, T (see fig. 8 + 9);
- the maximum rotation angle of one or more of the axes of movement is at least 90 degrees;
- for one or more of the dimensions V, W, X, Y, Z (see fig. 8) the following applies (in millimetres) : V minimum 455 and/or maximum 555, such as 505 or minimum 490 and/or maximum 590, such as 540, W minimum 180 and/or maximum 220, such as 200 or minimum 190 and/or maximum 230, such as 210, X minimum 700 and/or maximum 820, such as 760 or minimum 810 and/or maximum 930, such as 870, Y minimum 715 and/or maximum 875, such as 795 or minimum 945 and/or maximum 1105, such as 1025, Z minimum 135 and/or maximum 165, such as 150 or minimum 290 and/or maximum 350, such as 320.

While the robot arms of the work device are in operation and successively or one after the other mount a number of, for example, at least 3 or 5 or 10, preferably mutually identical, track components, for example axle counters or balises, with mutual spacing of preferably at least 10 or 20 centimetres, seen in the longitudinal direction of the railway, or according to the pitch of the sleepers, the rail vehicle preferably has a forward speed, for example of at least 5 or 10 or 30 metres per hour and/or a maximum of 0.5 or 1 or 5 or 10 kilometres per hour, continuously, while the number of track components is mounted successively.

Preferably, the definition of the axes of movement is: S=rotation of the base; and/or S=the shoulder joint; L=swivelling of the upper arm relative to the base; U=swivelling of the lower arm relative to the upper arm; and/or U=the elbow joint; R=rolling of the forearm around its longitudinal axis; B=pivoting of the free end and/or B=pivoting of the tool holder relative to the forearm; and/or B=the wrist joint; T=rolling of the free end and/or T=rolling of the tool holder around its longitudinal axis.

Preferably, the sequence of the axes of movement, viewed along the length of the robot arm, is as follows: S, L, U, R, B, T.

Preferably, the definition of the characteristic dimensions is: V=distance between L and the bearing surface of the base of the robot arm; W=distance between U and R; X=distance between L and U; Y=distance between U and B; Z=distance between S and L.

For the axes of movement, preferably one or more of the following applies for the mutual orientation in all positions of the robot arm: B perpendicular to T; U and L parallel; S perpendicular to L and U; R perpendicular to L and U.

Preferably, the small-sized robot arm has, compared to the large-sized robot arm, a minimum of 5 or 10 or 15% smaller horizontal and/or vertical reach of the free end and/or the tool holder.

The invention is further explained below using the scope of protection non-limiting embodiments shown in the accompanying drawing, which shows in:

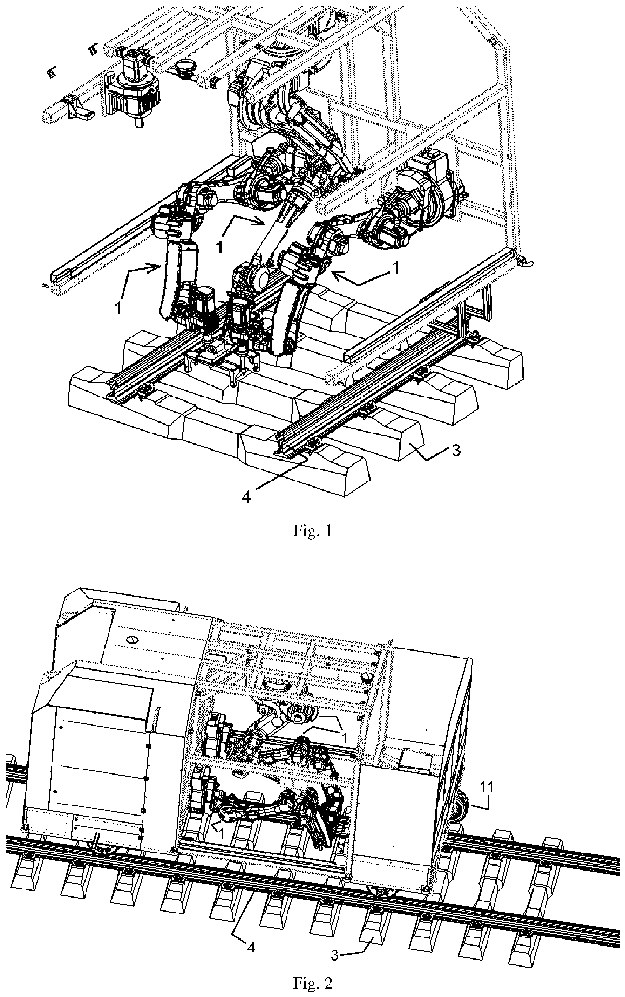

Fig. 1-7 from different viewing directions a railway vehicle with work device according to the invention;
Fig. 8-9 a side and perspective view of the robot arm type used;
Fig. 10 a cross-section of a part of the railway track of Fig. 1-7;
Fig. 11 a perspective view of a double railway or railway track.

Parts of the side wall of the railway vehicle shown have been removed to provide a better view of the work device inside the internal work space. The railway vehicle has a chassis frame that stands on the two rails with flanged rollers.

The rail vehicle shown in the drawing is, for example, of the type disclosed in DE 20 2004 013 732 U or NL1028854C2 or EP3078774A1.

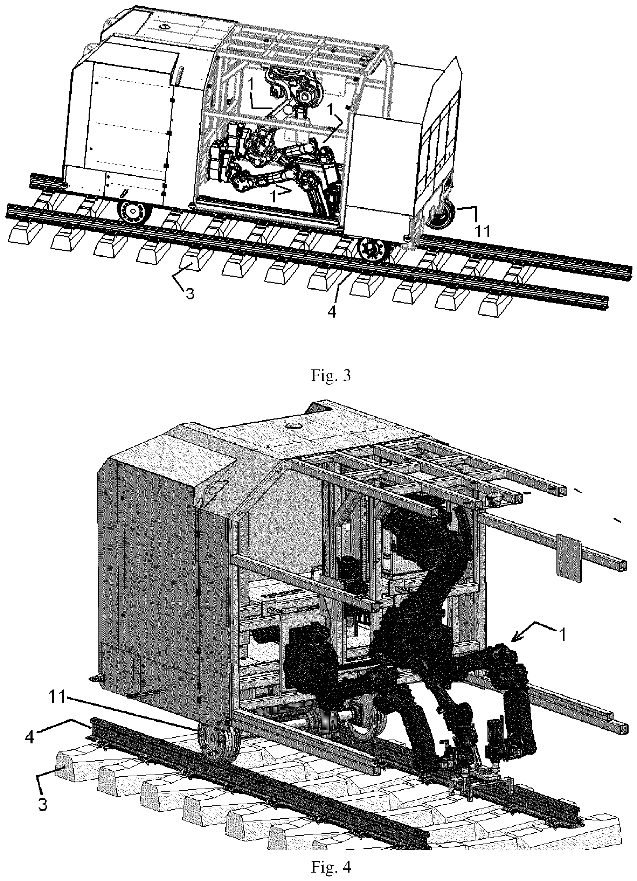

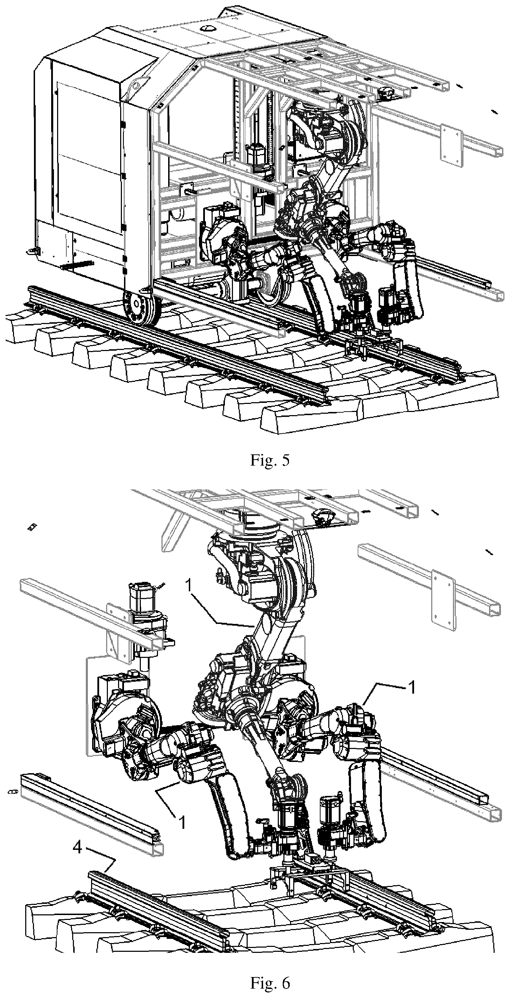

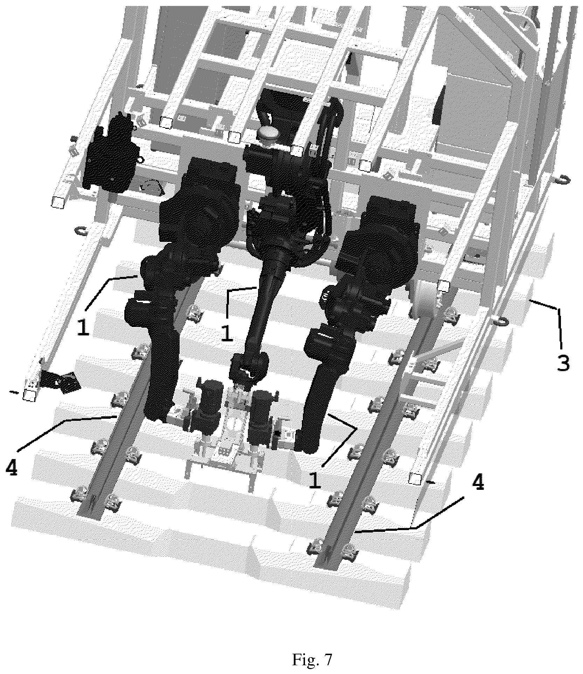

The chassis frame is formed by tubes and profiles and panels are attached to it to form walls to form an internal working space protected from the weather. The working device fixed to the chassis frame is equipped with three robot arms. The electric drive motors are also visible in Fig. 4-7 (of one of them only the mounting plate on the chassis frame is shown) .

A large robot arm is mounted at a high level, seen in plan view, centred on the central longitudinal axis of the rail vehicle, whereby the bottom of the base is turned upwards, in other words this robot arm hangs upside down. Two identical small - sized robotic arms are mounted at a low level at a distance on either side of the central longitudinal axis of the rail vehicle, seen in plan view, with the S-axis horizontal and parallel to the longitudinal direction of the rail vehicle. In plan view, the base of the large-sized robotic arm is located centrally between the bases of the two identical robotic arms, the bases of which are located on a straight line perpendicular to the central longitudinal axis of the rail vehicle. The base of the large-sized robotic arm is located at a horizontal distance, parallel to the central longitudinal axis of the rail vehicle, of 50 centimeters from the base of the two identical robot arms, seen in top view.

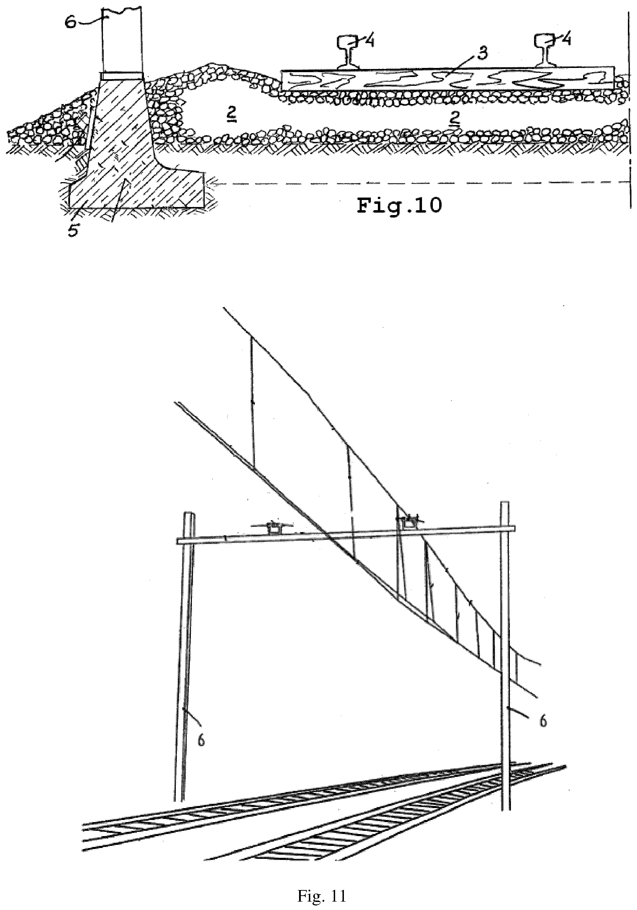

The railway in Fig. 11 is electrified, therefore there are portals (one of which is visible) along it, which carry the overhead wire. Fig. 10 shows how the portal leg 6 is founded by a steel-founded prefabricated element 5 next to or in the edge area of the ballast bed 2 which carries the sleepers 3 with the rails 4 on them.

Measures of different embodiments disclosed herein can be combined in different ways and different aspects of measures are considered mutually interchangeable. All described or disclosed measures in the drawing provide the subject matter of the invention on their own or in any combination, also independently of their place in the claims or their reference.

## Claims

**1.** Method for carrying out work on a section of a railway, the work may relate to maintenance or new construction, the railway vehicle comprises a chassis frame equipped with flanged rollers for driving over the two parallel rails of a railway, the railway vehicle delimits an internal work space, preferably open towards the bottom, which is equipped with a work device for working on the track structure, for example under the railway vehicle, for example for mounting a component, such as an axle counter or a balise, and equipped with at least one robot arm.

**2.** Method according to claim 1, the work device is equipped with exactly three robot arms inside the internal work space.

**3.** Method according to claim 1 or 2, which robot arms comprise at least one of: are of a vertically articulated type; each have their own working tool, such as a clamping, screwing or drilling tool, at their free end; are mounted sufficiently close to each other on the chassis frame so that the working area of the free end of one robot arm overlaps that of the two other robot arms and thus the working tools of two robot arms located on these robot arms can be placed at the same location on the track structure under the railway vehicle at the same time;

**4.** Method according to one of claims 1-3, with the working tool on one robot arm a component to be mounted, such as an axle counter, is held in the desired position while with the working tool on the other robot arm a fastening means, such as screws, located on the same component, such as an axle counter, are tightened, whereby this axle counter is mounted in place on the track structure; 5. Method according to any of claims 1 to 4, for the working device one or more of the following applies:
all robot arms are of exactly six-axis type;
the robot configuration is symmetrical, related to the longitudinal center axis of the rail vehicle and of the railway;
exactly one robot arm, called central robot arm, is positioned centered on the longitudinal center axis of the rail vehicle and of the railway, seen in plan view and is mounted vertically overhead and upside down, in other words with the bottom of its base facing upwards, preferably at a high level, and of which the S-axis, i.e. the axis of movement of the base, is directed vertically, upwards, and mounted on the rail vehicle with the base at a level, preferably at least 200 centimeters, above the level of the bottom of the running wheels of the rail vehicle, in other words the top of the rail head while the respective running wheel rests properly on the rail head;
the other two robot arms, called lateral robot arms, are positioned in the horizontal direction transversely to the median longitudinal axis of the rail vehicle and of the railway at a distance of preferably at least 50 centimetres from that median longitudinal axis, on either side of that median longitudinal axis and they are mutually identical and horizontally mounted at an identical, low level and of which the S-axis, i.e. the axis of movement of the base, is oriented horizontally and parallel to the median longitudinal axis of the rail vehicle and of the railway and they are mounted on the rail vehicle with the base at a level preferably at least 50 centimetres and/or at most 200 centimetres above the level of the bottom of the running wheels of the rail vehicle, in other words the top of the rail head while the running wheel in question rests on the rail head in the typical manner;
the high level is at least 1.5 metres above the low level; of the central robot arm, viewed in the direction of the central longitudinal axis of the rail vehicle and the railway, the base is at a distance of, for example, at least 50 and/or at most 150 centimetres from the base of both lateral robot arms of the work device;
these two lateral robot arms are located on a horizontal, straight line that is perpendicular to the central longitudinal axis of the rail vehicle and the railway;
for all three robot arms of the work device, it applies that their base is located, measured horizontally, preferably within 1 metre and/or measured vertically within 2 metres of one of the two other robot arms of the work device;
all three robot arms belonging to the work device are mounted with their bases fixed to the rail vehicle.

**6.** Method according to any of claims 1-5, the rail vehicle provides one or more of the following:
- a downwardly open internal working space, such that the internal working space is provided between two upright side walls of the rail vehicle, from which internal working space access is obtained via the open underside to the track structure under the rail vehicle;
- a chassis frame formed by profiles;
- panels attached to the chassis frame for forming walls to form an internal working space shielded from the weather;
- the internal working space is a rectangular block with a width of at least 1.5 metres and a height of at least 2 metres;
- the internal working space is provided between a front and a rear upright wall;
- the front and rear upright walls maintain a distance, measured along the centre longitudinal axis of the vehicle, of at least 1 and/or at most 3 metres;
- designed as a rail/road vehicle; - light in weight, maximum 5 or 10 thousand kilograms to be transported as a load from a truck by road to and from the railway;

**7.** Method according to any of claims 1-6, for all three industrial robot arms of the work device at least one or more of the following applies:
- of precisely 6-axis type;
- of vertically articulated type;
- contains the following axes of movement: S, L, U, R, B, T (see fig. 8 + 9);
- the maximum rotation angle of all six axes of movement is at least 90 degrees;
- for the dimensions V, W, X, Y, Z (see fig. 8) at least one or more of the following applies (in millimetres): V minimum 490 and/or maximum 590, W minimum 190 and/or 230, X minimum 810 and/or maximum 930, Y minimum 945 and/or maximum 1105, Z minimum 290 and/or maximum 350; while the robot arms of the work device are in operation and successively mount a number of at least 10 mutually identical components, such as axle counters with mutual spacing according to the pitch of the sleepers and directly following each other, viewed in the longitudinal direction of the railway, in mutual cooperation, the railway vehicle moving over the track has a continuous forward speed of, for example, at least 100 metres per hour, while the respective working tools, by manipulating the associated robot arms on which the working tools are located, meanwhile each time perform a movement cycle with respect to the railway vehicle of first moving forward, at a forward speed higher than that of the railway vehicle, to the next mounting location on the railway and placing and holding and screwing an axle counter at that location and then, while holding and screwing this axle counter, moving backwards and, with the axle counter, remaining at the same mounting location, until the axle counter has been properly mounted and then releasing the axle counter and moving forward again move, at a forward speed higher than that of the rail vehicle, to the next assembly location for placing and mounting a next axle counter of the number at that location.

**8.** Method according to any of claims 1-7, the rail vehicle is equipped with exactly one or two separate electric drive motors each with a vertically and downwardly oriented output shaft at high level, each placed associated with, such as vertically directly above, an associated rail and in the horizontal direction transverse to the center longitudinal axis of the rail vehicle and of the railway at a distance of at least 50 centimeters on either side of that center longitudinal axis; the input shaft of a work tool is directly drivingly coupled to the output shaft of a drive motor; the robot arm is used for spatially positioning a heavy duty work tool; the drive motors are fixedly mounted to the chassis frame of the rail vehicle, at a level for example at least 150 centimetres above the level of the bottom of the running wheels of the rail vehicle, in other words the top of the rail head while the running wheel in question rests on the rail head in the typical manner.

**9.** Method according to one of claims 1-8, the rail vehicle is non-articulated.

**10.** Rail vehicle for carrying out the method according to one of claims 1-9.

**11.** Rail vehicle according to claim 10, with one or more of the design measures according to one of claims 1-9.
